# EUROPÄISCHE PATENTSCHRIFT

(11) **EP 4 478 033 B1**
(45) Veröffentlichungstag und Bekanntmachung des Hinweises auf die Patenterteilung: **19.08.2026**
(21) Anmeldenummer: 24165885.5
(22) Anmeldetag: 25.03.2024
(51) Int. Cl.: G01N 21/3563, G01N 21/3577

(54) **PRÜFVORRICHTUNG UND -VERFAHREN ZUR BESTIMMUNG DER KONZENTRATION FLÜCHTIGER KORROSIONSINHIBITOREN**
TESTING DEVICE AND METHOD FOR DETERMINING THE CONCENTRATION OF VOLATILE CORROSION INHIBITORS
DISPOSITIF ET PROCÉDÉ DE TEST POUR DÉTERMINER LA CONCENTRATION D'INHIBITEURS DE CORROSION VOLATILS

(30) Priorität: 15.06.2023 DE 102023115748
(43) Veröffentlichungstag der Anmeldung: 18.12.2024
(73) Patentinhaber: IRPC Infrared - Process Control GmbH, 21079 Hamburg (DE)
(72) Erfinder: Bischof, Robert, 22880 Wedel (DE)
(74) Vertreter: Werner, André

(56) Entgegenhaltungen:
- DE-A1- 102012 200 203
- US-A1- 2010 264 315
- US-A1- 2018 113 025
- SABERION MAHMOUD ET AL: "Synergistic Corrosion Inhibition of Benzotriazole and Thiourea for Refineries and Petrochemical Plants", PROTECTION OF METALS AND PHYSICAL CHEMISTRY OF SURFACES, PLEIADES PUBLISHING, MOSCOW, vol. 58, no. 1, 2022, pages 200 - 215, XP037805627, ISSN: 2070-2051, [retrieved on 20220221], DOI: 10.1134/S2070205122010178

## Beschreibung

Die Erfindung betrifft eine Prüfvorrichtung sowie ein Prüfverfahren zur Bestimmung der Konzentration eines flüchtigen Korrosionsinhibitors in einer den flüchtigen Korrosionsinhibitor enthaltenden, infrarotlichtdurchlässigen Probe mittels Transmissions-Infrarotspektroskopie.

Eine der etablierten Methoden, Halbzeuge oder Bauteile aus metallischen Werkstoffen vor korrosiven Beeinträchtigungen während der Lagerung oder des Transports zu schützen, ist die Anwendung von flüchtigen Korrosionsinhibitoren (engl. volatile corrosion inhibitors, abgekürzt: VCI). Das auf den flüchtigen Korrosionsinhibitoren basierende Korrosionsschutzverfahren wird entsprechend als VCI-Methode bezeichnet. Die flüchtigen Korrosionsinhibitoren werden hierbei in der Regel in Form von sogenannten VCI-Materialien, die die flüchtigen Korrosionsinhibitoren auf oder in Trägermaterialien aus Papier, Karton, Folien oder Schaumstoff oder in Trägersubstanzen, wie Pulvern, Sprays oder Ölen, auf- oder eingearbeitet enthalten, gemeinsam mit dem zu schützenden Packgütern in die Lager- oder Transportverpackung gegeben. Die flüchtigen Korrosionsinhibitoren entfalten ihre korrosionsinhibierende Wirkung, indem sie im Verpackungsraum durch Verdampfen oder Sublimieren eine die flüchtigen Korrosionsinhibitoren enthaltende Atmosphäre, die sogenannte VCI-Atmosphäre, aufbauen und sich ferner als schützender Film auf der Oberfläche des Packgutes absetzen. Unter dem Begriff der VCI-Atmosphäre wird vorliegend die mit den flüchtigen Korrosionsinhibitoren angereicherte Luftumgebung der im Verpackungsraum befindlichen Halbzeuge oder Bauteile verstanden.

Für einen effektiven Korrosionsschutz werden die VCI-Materialien und deren Menge anwendungsspezifisch zusammengestellt, wobei die Art des zu schützenden metallischen Packgutes hinsichtlich seiner Korrosionsempfindlichkeit und Wertigkeit ebenso entscheidende Auswahlkriterien sind wie das vorgesehene Transport- bzw. Lagerszenario.

Da für die Vielzahl der hierbei denkbaren Szenarien schlechterdings Standardvorgaben gemacht werden können, basiert die Auswahl der Art und Menge der VCI-Materialen in der praktischen Anwendung oftmals auf Erfahrungswerten der jeweiligen Nutzer. Daher kommt es auch bei der Anwendung der VCI-Methode, verursacht durch falsche Handhabung der VCI-Materialien, mitunter dennoch zu Korrosionsschäden am Packgut. Als Fehlerquellen bei Anwendung der VCI-Methode sind beispielsweise die falsche oder zu lange Lagerung der VCI-Materialen vor deren eigentlichem Einsatz oder eine nicht an das Verpackungssystem angepasste Menge an VCI-Material zu nennen. Die im Regelfall fehlende Kenntnis der aktuellen Inhibitorkonzentration eines spezifischen VCI-Materials oder der VCI-Atmosphäre in einem Verpackungssystem erschwert die Prognose der Korrosionsschutzwirkung bzw. macht eine genaue Vorhersage der korrosionsschadensfreien Lagerdauer nahezu unmöglich.

Abgesehen von vergleichsweise aufwendigen, vor allem auf Chromatografie basierenden, Laboruntersuchungsmethoden, für die regelmäßig Untersuchungszeiten im Bereich von einigen Tagen eingeplant werden müssen, sind derzeit keine Prüfverfahren und Prüfvorrichtungen verfügbar, die die Bestimmung der Konzentration des flüchtigen Korrosionsinhibitors eines VCI-Materials im produktionsnahen Umfeld - zum Beispiel in der Lagerlogistik oder in der Wareneingangskontrolle - ermöglichen und damit eine schnelle, unkomplizierte und kostengünstige Prognose der Korrosionsschutzwirkung des VCI-Materials bei Anwendung in einem spezifischen Transport- oder Lagerszenario zulassen.

Ähnliches gilt für mittels der VCI-Methode verpackte Waren. Bei längeren Lager- und/oder Transportzeiten kann die korrosionsinhibierende Wirkung der flüchtigen Korrosionsinhibitoren nachlassen, weshalb insbesondere bei langzeitgelagerten Waren Bedarf besteht, eine nachlassende Schutzwirkung der VCI-Atmosphäre in der Verpackung früh- bzw. rechtzeitig vor Einsetzen von Korrosionserscheinungen zu detektieren. Für die Bestimmung der Konzentration des flüchtigen Korrosionsinhibitors in der VCI-Atmosphäre von Verpackungssystemen stehen bislang ebenfalls keine - zum Beispiel direkt im Lager - anwendbare Prüfverfahren oder Prüfvorrichtungen zu Verfügung.

DE 10 2012 200 203 A1 offenbart ein Verfahren und eine Vorrichtung zur spektroskopischen Untersuchung eines Messobjekts mit einer von einer Außenhülle umgebenen Materialprobe, wobei das Messobjekt mit einer Messstrahlung einer vorgegebenen spektralen Zusammensetzung bestrahlt wird. Dabei werden zwei unterschiedliche Einzelspektren des Messobjekts gemessen, bei denen die Messstrahlung jeweils zweimal die Außenhülle transmittiert. Die Untersuchung von VCI-Materialien ist in DE 10 2012 200 203 A1 nicht beschrieben.

US 2010/264315 A1 beschreibt ein Gerät zur Messung von Kohlenwasserstoffkonzentration, das auch bei schwankender Konzentration und Zusammensetzung der im Messgas enthaltenen Kohlenwasserstoffe zuverlässig deren Konzentration bestimmen kann. Zudem wird ein entsprechendes Messverfahren offenbart. Dabei wird das Messgas mit Infrarotlicht bestrahlt, dessen Wellenlängenbereich einen gemeinsamen Absorptionsbereich umfasst, der von einer oder mehreren chemischen Spezies absorbiert wird. Das durch das Messgas tretende Licht wird mittels eines Zeilensensors erfasst. Auf Basis des erfassten Lichts berechnet ein Analysator die Absorption im gemeinsamen Absorptionsbereich. Anschließend wird mithilfe dieser Daten die Gesamtkonzentration der chemischen Spezies, die im betreffenden Wellenlängenbereich absorbieren, innerhalb des Messgases bestimmt.

US 2018/113025 A1 offenbart ein optisches Spektroskopiesystem zur Überwachung chemischer Reaktionen in einem Flüssigkeitsreaktorsystem. Das System umfasst eine Probenflüssigkeitsleitung, die mit dem Reaktorsystem verbunden ist und die Probenflüssigkeit zu einem optischen Spektroskopiegerät leitet, sowie eine Laserstrahlquelle. Das Spektroskopiegerät empfängt den Laserstrahl, richtet ihn auf die Probenflüssigkeit und erzeugt daraus ein optisches Spektroskopiesignal. Ein Detektor erfasst dieses Signal und erzeugt ein entsprechendes Detektionssignal. Ein Prozessor verarbeitet das Detektionssignal, um Identität und Konzentration mindestens einer chemischen Spezies in der Flüssigkeit zu bestimmen.

Saberion, M. et al: "Synergistic Corrosion Inhibition of Benzotriazole and Thiourea for Refineries and Petrochemical Plants", Protection of Metals and Physical Chemistry of Surfaces, Bd. 58, Nr. 1 (2022-02-01), XP037805627, ISSN: 2070-2051, DOI: 10.1134/S2070205122010178 beschreibt die kombinierte Wirkung von Benzotriazol und Thiourea als Korrosionsinhibitoren. Infrarotspektroskopie wird hierbei genutzt, um die Struktur und Eigenschaften der auf der Metalloberfläche gebildeten Schutzschichten zu charakterisieren.

Aufgabe der Erfindung ist es, eine zur Qualitätskontrolle für das produktionsnahe Umfeld geeignete Prüfvorrichtung sowie ein entsprechendes Prüfverfahren zur quantitativen Bestimmung der Konzentration eines flüchtigen Korrosionsinhibitors eines VCI-Materials oder einer in einem Verpackungssystem vorhandenen VCI-Atmosphäre bereitzustellen - und somit eine Beurteilung der aktuell vorliegenden Korrosionsschutzwirkung vornehmen zu können.

Diese Aufgabe wird durch eine Prüfvorrichtung nach Anspruch 1 sowie ein Prüfverfahren nach Anspruch 5 gelöst. Zweckmäßige Weiterbildungen der Erfindung sind in den Ansprüchen 2 bis 4 sowie 6 bis 7 aufgeführt.

Die zur Bestimmung der Konzentration eines flüchtigen Korrosionsinhibitors in einer den flüchtigen Korrosionsinhibitor enthaltenden, infrarotlichtdurchlässigen VCI-Probe mittels Transmissions-Infrarotspektroskopie eingerichtete Prüfvorrichtung umfasst mindestens eine optische Einheit, die wiederum eine Lichtquelle zur Emission von Infrarotstrahlung und einen Infrarotdetektor zur Erfassung der von der Lichtquelle ausgesandten Infrarotstrahlung nach Strahlungsdurchgang durch die VCI-Probe aufweist.

Die VCI-Probe kann ein geometrisch bestimmtes Formelement aus einem VCI-Material sein, zum Beispiel ein den flüchtigen Korrosionsinhibitor aufweisendes Trägermaterial aus Papier, Karton, Folie oder Schaumstoff. Die infrarotlichtdurchlässige VCI-Probe muss nicht zwingend auch für sichtbares Licht durchlässig sein.

Der flüchtige Korrosionsinhibitor liegt im Regelfall verteilt in der VCI-Probe vor. Beispiele für flüchtige Korrosionsinhibitoren sind Nitrite, Carbonsäuren, Triazole oder auch organische Carbonsäure-Anhydride, wie Maleinsäureanhydrid oder 3-Methylphtalsäureanhydrid.

Nach Maßgabe der Erfindung sind die Lichtquelle und der Infrarotdetektor innerhalb der jeweiligen, in Kompaktbauweise ausgeführten optischen Einheit mit einem vorgegebenen Lichtquelle-Infrarotdetektor-Abstand zueinander fixiert, wobei der Lichtquelle-Infrarotdetektor-Abstand variabel justierbar ist. Der Lichtquelle-Infrarotdetektor-Abstand ist der freie Abstand zwischen Lichtquelle und Infrarotdetektor entlang des Strahlengangs bzw. in Strahlungsrichtung. Unter der Strahlungsrichtung wird die Achse der symmetrischen Lichtabstrahlung der Lichtquelle verstanden, zum Beispiel die Achse des Abstrahlkegels der Lichtquelle.

Um den vorgegebenen Lichtquelle-Infrarotdetektor-Abstand variabel einstellen zu können, ist die Lichtquelle relativ zum Infrarotdetektor bezüglich des Strahlengangs der Infrarotstrahlung, d. h. in Strahlungsrichtung, längsverschieblich fixierbar. D. h., der Abstand zwischen Lichtquelle und Infrarotdetektor kann - vor der Durchführung der Prüfung - auf einen gewünschten Lichtquelle-Infrarotdetektor-Abstand eingestellt bzw. justiert werden. Die Lichtquelle ist bei lotrechter Ausrichtung des Strahlengangs der Infrarotstrahlung in der optischen Einheit also höhenverstellbar gegenüber dem Infrarotdetektor. Zur Durchführung der Prüfung sind die Lichtquelle und der Infrarotdetektor zueinander mit dem gewünschten bzw. vorgegebenen Lichtquelle-Infrarotdetektor-Abstand fixiert. Dies ermöglicht es, in Bezug auf eine spezifische Prüfungssituation - mit Blick auf die geringstmögliche Spalte bei gleichzeitig guter Ausleuchtung - den optimalen Lichtquelle-Infrarotdetektor-Abstand einzustellen. Zum Beispiel kann der Lichtquelle-Infrarotdetektor-Abstand bei Alterung der Lichtquellen hierdurch auch nachjustiert werden.

Die Prüfvorrichtung ist vorzugsweise so ausgebildet, dass die VCI-Probe mit einer Relativbewegung quer zum Strahlengang der Infrarotstrahlung zwischen Lichtquelle und Infrarotdetektor durch die optische Einheit hindurchführbar bzw. durchleitbar ist.

Die Lichtquelle ist erfindungsgemäß eine Mittelinfrarotlichtquelle, die Infrarotstrahlung im Wellenlängenbereich von 2,5 µm bis 50 µm, insbesondere im Wellenlängenbereich von 3 µm bis 15 µm emittiert. Die Lichtquelle kann zum Beispiel eine Leuchtdiode, auch LED-Emitter bezeichnet, sein. Der Infrarotdetektor ist ein Spektralfotometer, das eingerichtet ist, mehrere elektromagnetische Spektren der Infrarotstrahlung im Infrarotwellenlängenbereich quasikontinuierlich, d. h. in kurzer zeitlicher Reihenfolge bzw. Taktung, zu erfassen. Der Erfassungsbereich des Infrarotdetektors liegt im Wellenlängenbereich von 2,5 µm bis 50 µm, vorzugsweise im Wellenlängenbereich von 3 µm bis 15 µm. Geeignet sind beispielsweise Infrarotdetektoren für den Wellenlängenbereich von 2,5 µm bis 5 µm und den Wellenlängenbereich von 3 µm bis 11 µm. Die Lichtquelle und der Infrarotdetektor sind bzw. werden zur quasikontinuierlichen Erfassung der Spektren vorzugsweise mittels eines Taktsignals synchronisiert.

Die Lichtquelle der Prüfvorrichtung kann mehrere Einzelemitter aufweisen, zum Beispiel mehrere in Reihe angeordnete LED-Emitter auf einer Emitterleiste. Ebenso kann der Infrarotdetektor aus mehreren Einzelsensoren bestehen.

Zur Realisierung der kompakten Bauweise werden als Lichtquelle und Infrarotdetektor kleine, d. h. miniaturisierte, und gleichzeitig robuste Mittelinfrarotkomponenten (kurz: MIR-Komponenten) verwendet, die zum Beispiel auf einer Leiterplatte oder Platine angebracht sind. Die Prüfvorrichtung besitzt keine während der Durchführung der Prüfung beweglichen - d. h. ausschließlich räumlich fixierten - Infrarotkomponenten. Zur exakten Positionierung einer formgebundenen VCI-Probe, d. h. zum Beispiel bei Verwendung von Folie als Trägermaterial, kann die Prüfvorrichtung einen Probenhalter, einen Probenträger oder eine Probenführung aufweisen, der nur die laterale, quer zum Strahlengang der Infrarotstrahlung gerichtete Bewegung der VCI-Probe zulässt.

Die Prüfvorrichtung ist insbesondere als mobiles Prüfgerät, zum Beispiel als eigenständiges ("stand-alone") Gerät oder Handgerät, konzipiert, wodurch es flexibel im produktionsnahen Umfeld einsetzbar ist.

Gemäß dem mit der vorstehend beschriebenen Prüfvorrichtung durchgeführten erfindungsgemäßen Prüfverfahren wird die Konzentration des flüchtigen Korrosionsinhibitors in der den flüchtigen Korrosionsinhibitor enthaltenden, infrarotlichtdurchlässigen VCI-Probe mittels Transmissions-Infrarotspektroskopie bestimmt, indem die VCI-Probe quer zum Strahlengang der Infrarotstrahlung in die mindestens eine optische Einheit der Prüfvorrichtung eingebracht wird. Vorzugsweise wird die VCI-Probe durch die optische Einheit hindurchgeführt bzw. bewegt. Eine solche laterale Bewegung der VCI-Probe in der optischen Einheit kann sowohl durch Bewegung der VCI-Probe relativ zur Prüfvorrichtung als auch durch Bewegung der Prüfvorrichtung relativ zur VCI-Probe erfolgen.

Nachdem die VCI-Probe in der optischen Einheit platziert ist oder während des Hindurchführens der VCI-Probe durch die optische Einheit, wird eine Mehrzahl von Spektren der Infrarotstrahlung im Infrarotwellenlängenbereich von 2,5 µm bis 50 µm quasikontinuierlich, d. h. in kurzer zeitlicher Reihenfolge bzw. Taktung, erfasst. Die Konzentration des flüchtigen Korrosionsinhibitors in der VCI-Probe wird im Anschluss daran durch multivariate Datenanalyse der erfassten Mehrzahl von Spektren der Infrarotstrahlung ermittelt. Die Algorithmen zur multivarianten Datenanalyse elektromagnetischer Spektren sind grundsätzlich bekannt.

Die Konzentration des flüchtigen Korrosionsinhibitors in der VCI-Probe kann sowohl als eine Anzahl von Einzelwerten als auch - vorzugsweise - als gemittelter Wert bereitgestellt werden. Einzelwerte können zudem lokalen Positionen an der VCI-Probe zugeordnet werden und auf dieser Basis kann die räumliche Verteilung, zum Beispiel die Flächenverteilung, des flüchtigen Korrosionsinhibitors in der VCI-Probe bestimmt werden. Ferner ist es auch möglich, eine gleitende Mittelwertberechnung der Konzentration während des Hindurchführens der VCI-Probe durch die optische Einheit vorzunehmen.

Mit der vorgeschlagenen Prüfvorrichtung und dem damit durchgeführten Prüfverfahren ist es möglich, die Konzentration des flüchtigen Korrosionsinhibitors in der VCI-Probe zerstörungsfrei in einem Prüfzyklus an unterschiedlichen Stellen der VCI-Probe zu erfassen. Die benötigte Prüfdauer liegt, je nach beabsichtigter Genauigkeit der Konzentrationswertbestimmung, im ein- bis dreistelligen Sekundenbereich - und mithin deutlich unterhalb der Prüfdauer, die bei den derzeit praxisüblichen Laboruntersuchungen aufgewandt werden muss.

Die vorteilhaften Einsatzgebiete liegen - nicht zuletzt aufgrund der kurzen Prüfzeiten - im Bereich der Wareneingangskontrolle, im Bereich der Langzeitlagerung von Verpackungssystemen, im Bereich der Qualitätssicherung bei der Zusammenstellung von Verpackungen und im Bereich der Qualitätskontrolle während der Produktion der VCI-Materialen. Ferner lassen sich mittels der Prüfvorrichtung bei korrosionsbedingten Schadensfällen Restkonzentrationen des VCI-Materials in der VCI-Probe ermitteln.

Die erfindungsgemäße Prüfvorrichtung und das erfindungsgemäße Prüfverfahren ermöglichen es u. a., die optimale Menge der VCI-Materialien für ein spezifisches Verpackungssystem festzulegen. So lässt sich die Einsatzmenge der VCI-Materialien - in vorteilhafter Weise sowohl in ökonomischer, ökologischer und arbeitsschutztechnischer Sicht - auf das essentiell notwendige Maß begrenzen; insbesondere kann hierdurch auf die aus Sicherheitsgründen derzeit häufig angewandte Methode der Überdosierung von VCI-Materialen verzichtet werden.

Letztlich tragen Prüfvorrichtung und -verfahren also dazu bei, optimal an die jeweiligen Lager- oder Transportszenarien angepasste Korrosionsschutzmaßnahmen festzulegen und somit Korrosionsschäden zu meiden.

Die Prüfvorrichtung kann ferner eine Prozessoreinheit und eine Datenbankeinheit zur Speicherung von Spektren bekannter flüchtiger Korrosionsinhibitoren aufweisen. Die Datenbankeinheit mit den gespeicherten Spektren bekannter flüchtiger Korrosionsinhibitoren wird auch als Modellbibliothek bezeichnet. Die Prozessoreinheit ist eingerichtet, durch Abgleich erfasster Spektren mit den in der Datenbankeinheit bzw. Modellbibliothek hinterlegten Spektren den zu prüfenden flüchtigen Korrosionsinhibitor stofflich zu identifizieren. Diese Ausführung der Prüfvorrichtung kann u. a. auch genutzt werden, um - zum Beispiel bei besonders spezifischen Inhibitorkombinationen - eine Herstelleridentifikation vorzunehmen oder gefälschte VCI-Materialen zu erkennen und auszusondern.

Gemäß einer Ausgestaltung der Prüfvorrichtung können mehrere Lichtquellen, zum Beispiel mehrere auf einer Emitterleiste angeordnete LED-Emitter, mit einem Infrarotdetektor kombiniert werden, wobei jede Lichtquelle mit dem Infrarotdetektor jeweils eine optische Einheit bildet. Umgekehrt können auch mehrere Infrarotdetektoren mit einer Lichtquelle zu mehreren optischen Einheiten kombiniert werden. Durch Einzelansteuerung der Komponenten können gleichzeitig Messdaten aus mehreren optischen Einheiten erfasst und verarbeitet werden.

Ferner können mehrere optischen Einheiten, bestehend aus jeweils einer Lichtquelle und jeweils einem Infrarotdetektor, nebeneinander angeordnet sein. Gemäß einer beispielhaften Ausgestaltung einer solchen Prüfvorrichtung umfasst diese zwei optische Einheiten, die so ausgerichtet sind, dass die Strahlungsrichtung der Infrarotstrahlung beider optischer Einheiten parallel zueinander verläuft, aber entgegengesetzt gerichtet ist. Beide optische Einheiten sind zudem quer zum Strahlengang der Infrarotstrahlung beabstandet zueinander angeordnet. Sie besitzen hierbei vorzugsweise den gleichen Lichtquelle-Infrarotdetektor-Abstand und sind fluchtend zueinander ausgerichtet. Durch die gegenläufige Durchstrahlung der VCI-Probe können richtungsabhängige Messeffekte erkannt oder ausgeblendet werden.

Die vorstehend beschriebene Ausführung der Prüfvorrichtung mit zwei optischen Einheiten ist insbesondere zur Prüfung von VCI-Materialen in Folienform konzipiert. Hierfür kann die Prüfvorrichtung mit einem Rollensystem kombiniert sein, mittels dem beispielsweise eine Bahn der den flüchtigen Korrosionsinhibitor enthaltenden Folie ab- bzw. wieder aufgerollt wird. Während die durch das Rollensystem geförderte und vorgespannte Folienbahn die beiden optischen Einheiten durchläuft, wird die den flüchtigen Korrosionsinhibitor enthaltende Folie an jeder einzelnen spezifischen Position, zeitlich nacheinander, von beiden Seiten durchstrahlt. Das Rollensystem ermöglicht einerseits also den Transport der Folie mit gleichbleibender Geschwindigkeit und anderseits wird die Folie im Prüfbereich, d. h. während des Durchlaufens der optischen Einheiten, exakt positioniert und gespannt. Beeinträchtigungen der Messsignale, die zum Beispiel von Wellen, Knicken, Falten oder ähnlichen Ungänzen der Folie ausgehen, werden durch das Vorspannen der Folie vermindert. Mit dieser Ausführung der Prüfvorrichtung können Folienbänder kontinuierlich im Durchlauf geprüft werden.

Die zu prüfende VCI-Probe liegt erfindungsgemäß in formgebundener Ausprägung vor.

Gemäß einer bevorzugten Ausbildung ist die VCI-Probe eine VCI-Folie, die aus einer infrarotlichtdurchlässigen, den flüchtigen Korrosionsinhibitor enthaltenden Kunststofffolie besteht. Die Foliendicke der VCI-Folien liegt üblicherweise im Bereich von circa 25 µm bis 120 µm.

Zum Fixieren der formgebundenen, d. h. als geometrisch bestimmtes Formelement ausgebildeten, folienartigen VCI-Probe umfasst die Prüfvorrichtung ferner einen Probenhalter bzw. Folienhalter, der eingerichtet ist, die folienartige VCI-Probe flächig zu spannen, d. h. in einer Ebene glatt und faltenfrei zu ziehen bzw. zu strecken. Hierzu ist der Probenhalter beispielsweise als Rahmen ausgebildet, der einen Spannrahmen und einen als Gegenhalter dienenden Aufnahmerahmen aufweist. Zwischen dem Spannrahmen und dem Aufnahmerahmen wird die folienartige VCI-Probe geklemmt und gleichzeitig gespannt. Zu diesem Zweck kann der Spannrahmen einen umlaufenden Steg aufweisen, der in eine geometrisch korrespondierende, umlaufende Nut am Aufnahmerahmen eingreift. Während des Einlegens und Festklemmens der folienartigen VCI-Probe zwischen Spann- und Aufnahmerahmen wird die Folie beim Einziehen in die Nut flächig gespannt, d. h. in einer Ebene gestreckt. Durch das flächige, ebene Spannen der folienartige VCI-Probe wird die Messgenauigkeit beim Durchstrahlen verbessert; insbesondere werden Lichtablenkungen, die bei ungleichmäßigen, zum Beispiel gewellten, VCI-Folien auftreten können, vermieden. Die beschriebene Ausbildung des Probenhalters kann als umfänglich geschlossener Rahmen oder auch als teilgeschlossener Rahmen ausgeführt sein. Der Probenhalter kann zum Beispiel als Zange ausgebildet sein, mit der die VCI-Probe gegriffen, in die optische Einheit der Prüfvorrichtung eingebracht und in der optischen Einheit fixiert werden kann.

Der Probenhalter ermöglicht eine fixierte Aufspannung in der optischen Einheit oder als Führungselement der VCI-Probe die laterale Bewegung quer zum Strahlengang, wobei sowohl geradlinige als auch bogenförmige Bewegungen ausgeführt werden können. In zeitlicher Dimension kann Bewegung gerastert oder kontinuierlich erfolgen.

Gemäß einer Ausgestaltung des als Rahmen ausgebildeten Probenhalters weist dieser neben dem Spannrahmen und dem als Gegenhalter dienenden Aufnahmerahmen zusätzlich einen den Spannrahmen umfänglich - vollständig oder teilweise - umschließenden Fixierrahmen auf, der ebenso wie der Spannrahmen einen umlaufenden Steg aufweist. Am Aufnahmerahmen, der für den Fixierrahmen ebenfalls als Gegenhalter dient, ist eine mit dem Steg des Fixierrahmens geometrisch korrespondierende, umlaufende Nut eingebracht, die die mit dem Steg des Spannrahmens korrespondierende Nut umschließt. Die Steghöhe des Fixierrahmenstegs ist vorzugsweise größer oder gleich der Steghöhe des Spannrahmenstegs; die Nuten der Aufnahmerahmen sind hierzu korrespondierend ausgeformt. Mittels dieser Ausgestaltung des Probenhalters wird die folienartige VCI-Probe zunächst zwischen Fixierrahmen und Aufnahmerahmen geklemmt; im Anschluss wird die folienartige VCI-Probe durch Pressen des Spannrahmens auf die bereits fixierte VCI-Probe gespannt. Durch die Vorfixierung der folienartigen VCI-Probe wird das einheitliche flächige bzw. ebene Spannen der folienartigen VCI-Probe nochmals verbessert.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen
- Fig. 1:: eine erste Ausführung der Prüfvorrichtung im Längsschnitt,
- Fig. 2:: eine zweite Ausführung der Prüfvorrichtung im Längsschnitt
- Fig. 3:: eine erste Ausführung des Probenhalter mit VCI-Probe in der Draufsicht,
- Fig. 4:: den geöffneten Probenhalter der ersten Ausführung im Längsschnitt,
- Fig. 5:: den geschlossenen Probenhalter der ersten Ausführung im Längsschnitt,
- Fig. 6:: eine dritte Ausführung der Prüfvorrichtung im Längsschnitt,
- Fig. 7:: eine zweite Ausführung des Probenhalters im Längsschnitt, und
- Fig. 8:: die zweite Ausführung des Probenhalter während des Schließvorgangs im Längsschnitt.

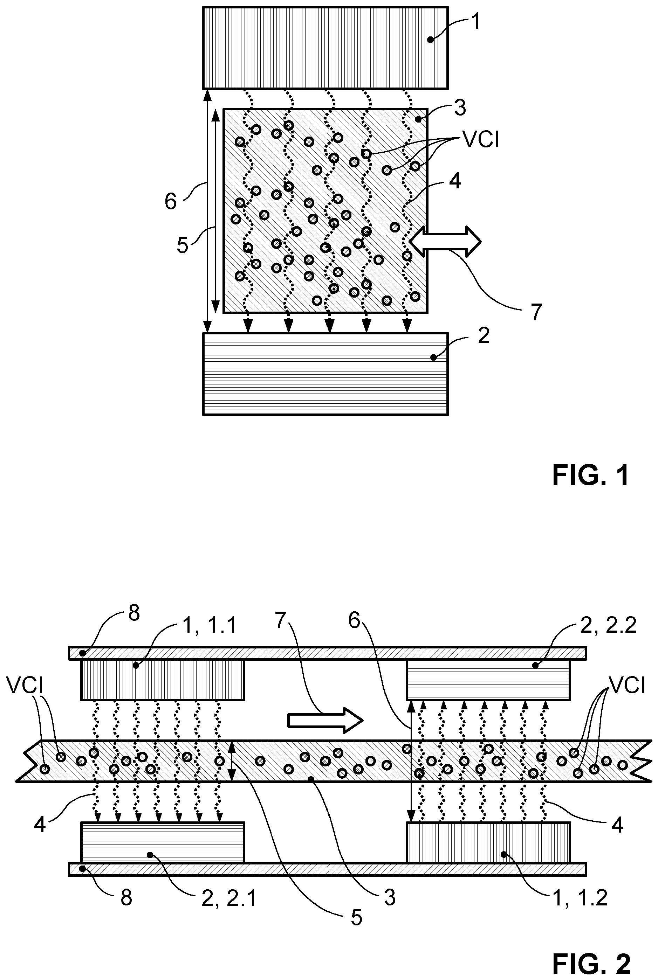

Die in der Fig. 1 dargestellte optische Einheit gemäß der ersten Ausführung der Prüfvorrichtung umfasst die Lichtquelle 1 und den Infrarotdetektor 2. Die Lichtquelle 1 emittiert Infrarotstrahlung 4 in Richtung des Infrarotdetektors 2, der die Infrarotstrahlung 4 im Wellenlängenbereich von 5 µm bis 15 µm in Form eines elektromagnetischen Spektrums erfasst.

Die Lichtquelle 1 und der Infrarotdetektor 2 sind mit dem vorgegebenen Lichtquelle-Infrarotdetektor-Abstand 6 zueinander fixiert. Die von der Lichtquelle 1 emittierte Infrarotstrahlung 4 durchläuft die infrarotlichtdurchlässige, die flüchtigen Korrosionsinhibitoren VCI enthaltende VCI-Probe 3 entlang der Durchstrahlungslänge 5 und trifft auf den der Lichtquelle 1 gegenüberliegenden Infrarotdetektor 2. Aus dem durch die Interaktion der Infrarotstrahlung 4 mit den flüchtigen Korrosionsinhibitoren VCI beeinflussten Spektrum kann durch multivariate Datenanalyse die Konzentration der flüchtigen Korrosionsinhibitoren VCI in der VCI-Probe 3 bestimmt werden.

Die VCI-Probe 3 ist querbeweglich zwischen der Lichtquelle 1 und dem Infrarotdetektor 2 angeordnet, wodurch die Relativbewegung 7 der VCI-Probe 3 durch die optische Einheit bzw. den Strahlengang der Infrarotstrahlung 4 ermöglicht ist. Wird die VCI-Probe 3 durch die optische Einheit hindurchgeführt bzw. bewegt, können quasikontinuierlich mehrere Spektren in verschiedenen lokalen Bereichen der VCI-Probe 3 erfasst werden. Durch multivariate Datenanalyse anhand einer solchen Mehrzahl von Spektren kann die mittlere Konzentration der flüchtigen Korrosionsinhibitoren VCI in der VCI-Probe 3 oder auch die räumliche Konzentrationsverteilung der flüchtigen Korrosionsinhibitoren VCI in der VCI-Probe 3 ermittelt werden.

Die Prüfvorrichtung gemäß der zweiten Ausführung nach der Fig. 2 umfasst zwei der optischen Einheiten, die räumlich beanstandet zueinander angeordnet sind. Die Strahlungsrichtung der Infrarotstrahlung 4 der beiden optischen Einheiten verläuft parallel zueinander, ist jedoch entgegengesetzt gerichtet.

Die Lichtquelle 1, 1.1 der ersten optischen Einheit und der Infrarotdetektor 2, 2.2 der zweiten optischen Einheit sind auf einer gemeinsamen Platine 8 angebracht; der Infrarotdetektor 2, 2.1 der ersten optischen Einheit und die Lichtquelle 1, 1.2 der zweiten optischen Einheit sind gemeinsam auf einer weiteren Platine 8 installiert. Die VCI-Probe 3, im Ausführungsbeispiel eine VCI-Folie auf Basis von Polyethylen, wird gemäß der Pfeildarstellung der Relativbewegung 7 durch die beiden optischen Einheiten, senkrecht zum Strahlengang der Infrarotstrahlung 4, hindurchgeführt. Der Vorschub der VCI-Folie erfolgt mit konstanter Geschwindigkeit. Hierzu wird die VCI-Folie, die als Folienband ausgebildet ist, mittels eines (nicht dargestellten) Rollensystems durch die beiden optischen Einheiten gefördert. Das Rollensystem gewährleistet den konstanten Vorschub der VCI-Folie und spannt diese gleichzeitig, sodass die VCI-Probe 3 positionsgetreu sowie wellen- und faltenfrei durch den Spalt zwischen den optischen Einheiten läuft.

Beide optischen Einheiten besitzen den gleichen Lichtquelle-Infrarotdetektor-Abstand 6 und sind fluchtend zueinander angeordnet. Die VCI-Probe 3 durchläuft beide optische Einheiten mittig zwischen den Lichtquellen 1, 1.1, 1.2 und den Infrarotdetektoren 2, 2.1, 2.2, sodass sich die Durchstrahlungslänge 5 in beiden optischen Einheiten an gleicher Stelle in Bezug zum Lichtquelle-Infrarotdetektor-Abstand 6 befindet. Lediglich die Durchstrahlungsrichtung unterscheidet sich zwischen beiden optischen Einheiten.

Die Ausführung gemäß der Fig. 2 ermöglicht es, die identische Position einer VCI-Probe 3 in kurzer zeitlicher Abfolge mit zwei unterschiedlichen Durchstrahlungsrichtungen zu prüfen, wodurch richtungsabhängige Messeffekte bei der Durchstrahlung minimiert werden. Zudem können Folienbänder kontinuierlich im Durchlauf kontrolliert werden. Neben einer mittleren Konzentration der flüchtigen Korrosionsinhibitoren VCI können so auch deren Flächenverteilung im Folienband oder Konzentrationsschwankungen ermittelt werden.

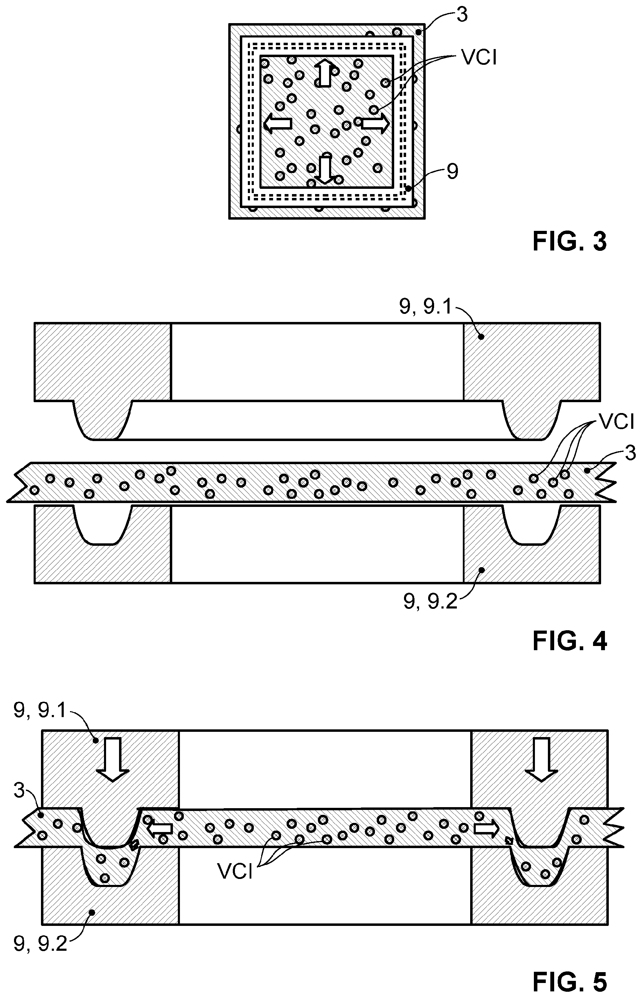

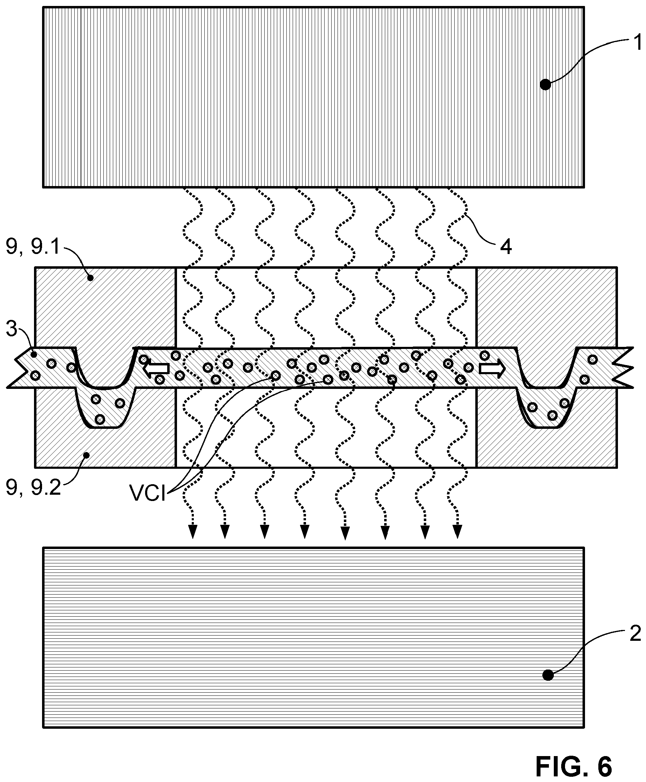

In Fig. 3 ist der als umlaufender Rahmen ausgebildete Probenhalter 9 mit der darin eingespannten als VCI-Folie ausgebildeten VCI-Probe 3 in der Draufsicht dargestellt. Die korrespondierenden Ansichten der Fig. 4 und 5 zeigen die Anordnung sowie das Einspannen der VCI-Probe 3 zwischen dem Spannrahmen 9.1 und dem Aufnahmerahmen 9.2 des Probenhalters 9. Beim Klemmen der VCI-Folie zwischen Spannrahmen 9.1 und Aufnahmerahmen 9.2 wird die VCI-Folie durch den Steg des Spannrahmens 9.1 in die Nut des Aufnahmerahmens 9.2 gedrückt und im Flächenbereich innerhalb des Rahmens gleichzeitig gespannt. Durch diese Dehnung wird die VCI-Folie in einer Ebene gespannt. In Fig. 6 ist die im Strahlengang der Infrarotstrahlung 4 in die optische Einheit zwischen der Lichtquelle 1 und dem Infrarotdetektor 2 eingebrachte, im Probenhalter 9 fixierte VCI-Probe 3 dargestellt.

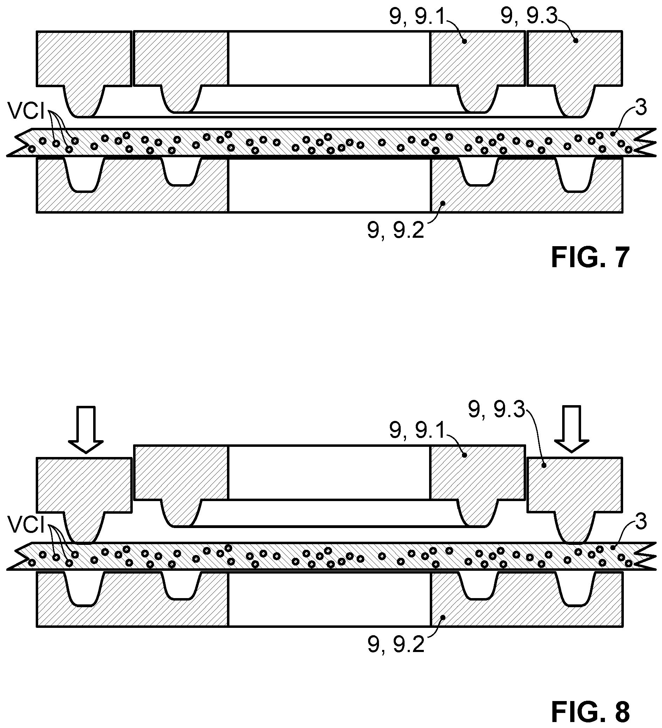

Eine weitere Ausgestaltung des Probenhalters 9 mit dem Spannrahmen 9.1, dem Fixierrahmen 9.3 und dem für beide als Gegenhalter dienenden Aufnahmerahmen 9.2 ist in den Fig. 7 und 8 dargestellt. Der Fixierrahmen 9.3 umschließt den Spannrahmen 9.1 und ist frei gegenüber diesem beweglich. Im Übrigen entspricht die Ausgestaltung der nach Fig. 4. Zum Spannen der als VCI-Folie ausgebildeten VCI-Probe 3 wird diese zunächst zwischen Fixierrahmen 9.3 und Aufnahmerahmen 9.2 geklemmt, indem - wie in Fig. 8 gezeigt - der Fixerrahmen 9.3 gegen den Aufnahmerahmen 9.2 gedrückt wird. Der Steg des Fixerrahmens 9.3 greift hierbei in die korrespondierende Nut des Aufnahmerahmens 9.2 ein. Im nachfolgenden Schritt wird die fixierte VCI-Folie durch Anpressen des Spannrahmens 9.1 an den Aufnahmerahmen 9.2 gedrückt, wobei der Steg des Spannrahmens 9.1 in die Nut des Aufnahmerahmens 9.2 eingreift.

### Bezugszeichenliste

- 1: Lichtquelle
- 1.1: Lichtquelle der ersten optischen Einheit
- 1.2: Lichtquelle der zweiten optischen Einheit
- 2: Infrarotdetektor
- 2.1: Infrarotdetektor der ersten optischen Einheit
- 2.2: Infrarotdetektor der zweiten optischen Einheit
- 3: VCI-Probe
- 4: Infrarotstrahlung
- 5: Durchstrahlungslänge
- 6: Lichtquelle-Infrarotdetektor-Abstand
- 7: Relativbewegung
- 8: Platine
- 9: Probenhalter
- 9.1: Spannrahmen
- 9.2: Aufnahmerahmen
- 9.3: Fixierrahmen
- VCI: flüchtiger Korrosionsinhibitor

## Patentansprüche

1. Prüfvorrichtung, eingerichtet zur Bestimmung der Konzentration eines flüchtigen Korrosionsinhibitors, VCI, in einer den flüchtigen Korrosionsinhibitor VCI, enthaltenden, infrarotlichtdurchlässigen VCI-Probe (3) mittels Transmissions-Infrarotspektroskopie, wobei die Prüfvorrichtung mindestens eine optische Einheit umfasst, die eine Lichtquelle (1) zur Emission von Infrarotstrahlung (4) und einen Infrarotdetektor (2) zur Erfassung der von der Lichtquelle (1) ausgesandten Infrarotstrahlung (4) nach Strahlungsdurchgang durch die VCI-Probe (3) aufweist, wobei
- die Lichtquelle (1) und der Infrarotdetektor (2) innerhalb der jeweiligen, in Kompaktbauweise ausgeführten optischen Einheit mit einem vorgegebenen, variabel einstellbaren Lichtquelle-Infrarotdetektor-Abstand (6) zueinander fixiert sind, wobei zur variablen Einstellung des vorgegebenen Lichtquelle-Infrarotdetektor-Abstandes (6) die Lichtquelle (1) relativ zum Infrarotdetektor (2) längsverschieblich bezüglich des Strahlengangs der Infrarotstrahlung (4) fixierbar ist,
- die Lichtquelle (1) eine Mittelinfrarotlichtquelle ist, die Infrarotstrahlung (4) im Infrarotwellenlängenbereich von 2,5 µm bis 50 µm emittiert, und
- der Infrarotdetektor (2) ein Spektralfotometer ist, das eingerichtet ist, Spektren der Infrarotstrahlung (4) im Infrarotwellenlängenbereich von 2,5 µm bis 50 µm quasikontinuierlich zu erfassen
**dadurch gekennzeichnet, dass** die Prüfvorrichtung ferner einen Probenhalter (9) zum Fixieren einer als geometrisch bestimmtes Formelement ausgebildeten folienartigen VCI-Probe (3) aufweist, wobei der Probenhalter (9) eingerichtet ist, die folienartige VCI-Probe (3) flächig in einer Ebene faltenfrei zu spannen.

2. Prüfvorrichtung nach Anspruch 1, **dadurch gekennzeichnet, dass** diese eine Prozessoreinheit und eine Datenbankeinheit zur Speicherung von Spektren bekannter flüchtiger Korrosionsinhibitoren, VCI, aufweist, wobei die Prozessoreinheit eingerichtet ist, durch Abgleich erfasster Spektren mit den in der Datenbankeinheit gespeicherten bekannten Spektren den zu prüfenden flüchtigen Korrosionsinhibitor, VCI, stofflich zu identifizieren.

3. Prüfvorrichtung nach Anspruch 1 oder 2, **dadurch gekennzeichnet, dass** diese zwei optische Einheiten umfasst, wobei die beiden optischen Einheiten mit entgegengesetzt gerichteter Infrarotstrahlung (4), quer zum Strahlengang der Infrarotstrahlung (4) beabstandet zueinander angeordnet sind.

4. Prüfvorrichtung nach einem der Ansprüche 1 bis 3, **dadurch gekennzeichnet, dass** die Prüfvorrichtung so ausgebildet ist, dass die VCI-Probe (3) mit einer Relativbewegung (7) quer zum Strahlengang der Infrarotstrahlung (4) zwischen Lichtquelle (1) und Infrarotdetektor (2) durch die optische Einheit hindurchführbar ist.

5. Prüfverfahren zur Bestimmung der Konzentration eines flüchtigen Korrosionsinhibitors, VCI, in einer den flüchtigen Korrosionsinhibitor, VCI, enthaltenden, infrarotlichtdurchlässigen, als geometrisch bestimmtes Formelement ausgebildete folienartige VCI-Probe (3) mittels Transmissions-Infrarotspektroskopie, durchgeführt mittels der Prüfvorrichtung nach einem der Ansprüche 1 bis 4, wobei eine Mehrzahl von Spektren der Infrarotstrahlung (4) im Infrarotwellenlängenbereich von 2,5 µm bis 50 µm quasikontinuierlich erfasst werden, während die VCI-Probe (3) quer zum Strahlengang der Infrarotstrahlung (4) in die mindestens eine optische Einheit der Prüfvorrichtung eingebracht wird, wobei die folienartige VCI-Probe (3) mittels des Probenhalters (9) flächig in einer Ebene faltenfrei gespannt wird, und wobei durch multivariate Datenanalyse der erfassten Mehrzahl von Spektren der Infrarotstrahlung (4) die Konzentration des flüchtigen Korrosionsinhibitors, VCI, in der VCI-Probe (3) bestimmt wird.

6. Prüfverfahren nach Anspruch 5, **dadurch gekennzeichnet, dass** die VCI-Probe (3) durch den Strahlengang der Infrarotstrahlung (4) der beiden optischen Einheiten hindurchgeführt wird.

7. Prüfverfahren nach Anspruch 5 oder 6, **dadurch gekennzeichnet, dass** die VCI-Probe (3) eine VCI-Folie ist, die aus einer infrarotlichtdurchlässigen, den flüchtigen Korrosionsinhibitor, VCI, enthaltenden Kunststofffolie besteht.

## Claims

1. Test device, adapted for determining the concentration of a volatile corrosion inhibitor, VCI, in an infrared-light-transmissive VCI sample (3) containing the volatile corrosion inhibitor, VCI, by means of transmission infrared spectroscopy, wherein the test device comprises at least one optical unit having a light source (1) for emitting infrared radiation (4) and an infrared detector (2) for detecting the infrared radiation (4) emitted by the light source (1) after passage of the radiation through the VCI sample (3), wherein
- the light source (1) and the infrared detector (2) are fixed relative to one another within the respective optical unit, which is constructed in a compact design, with a predetermined, variably adjustable light-source/infrared-detector distance (6), wherein, for variable adjustment of the predetermined light-source/infrared-detector distance (6), the light source (1) is fixable so as to be longitudinally displaceable relative to the infrared detector (2) with respect to the beam path of the infrared radiation (4),
- the light source (1) is a mid-infrared light source which emits infrared radiation (4) in the infrared wavelength range from 2.5 µm to 50 µm, and
- the infrared detector (2) is a spectrophotometer which is adapted to detect spectra of the infrared radiation (4) in the infrared wavelength range from 2.5 µm to 50 µm quasi-continuously,
**characterised in that** the test device further comprises a sample holder (9) for fixing a film-like VCI sample (3) formed as a geometrically defined shaped element, wherein the sample holder (9) is adapted to tension the film-like VCI sample (3) flat in one plane without folds.

2. Test device according to claim 1, **characterised in that** it comprises a processor unit and a database unit for storing spectra of known volatile corrosion inhibitors, VCI, wherein the processor unit is adapted to identify, in terms of substance, the volatile corrosion inhibitor, VCI, to be tested by comparing detected spectra with the known spectra stored in the database unit.

3. Test device according to claim 1 or 2, **characterised in that** it comprises two optical units, wherein the two optical units are arranged spaced apart from one another transversely to the beam path of the infrared radiation (4), with oppositely directed infrared radiation (4).

4. Test device according to any one of claims 1 to 3, **characterised in that** the test device is designed such that the VCI sample (3) can be guided through the optical unit between the light source (1) and the infrared detector (2) with a relative movement (7) transversely to the beam path of the infrared radiation (4).

5. Test method for determining the concentration of a volatile corrosion inhibitor, VCI, in an infrared-light-transmissive, film-like VCI sample (3), formed as a geometrically defined shaped element and containing the volatile corrosion inhibitor, VCI, by means of transmission infrared spectroscopy, carried out by means of the test device according to any one of claims 1 to 4, wherein a plurality of spectra of the infrared radiation (4) in the infrared wavelength range from 2.5 µm to 50 µm are detected quasi-continuously while the VCI sample (3) is introduced into the at least one optical unit of the test device transversely to the beam path of the infrared radiation (4), wherein the film-like VCI sample (3) is tensioned flat in one plane without folds by means of the sample holder (9), and wherein the concentration of the volatile corrosion inhibitor, VCI, in the VCI sample (3) is determined by multivariate data analysis of the detected plurality of spectra of the infrared radiation (4).

6. Test method according to claim 5, **characterised in that** the VCI sample (3) is guided through the beam path of the infrared radiation (4) of the two optical units.

7. Test method according to claim 5 or 6, **characterised in that** the VCI sample (3) is a VCI film consisting of an infrared-light-transmissive plastics film containing the volatile corrosion inhibitor, VCI.

## Revendications

1. Dispositif de test, conçu pour déterminer la concentration d'un inhibiteur de corrosion volatil, VCI, dans un échantillon de VCI (3) transparent à la lumière infrarouge contenant un inhibiteur de corrosion volatil, VCI, par spectroscopie infrarouge de transmission, ledit dispositif de test comprenant au moins une unité optique qui comporte une source de lumière (1) destinée à l'émission de rayonnement infrarouge (4) et un détecteur infrarouge (2) destiné à la détection du rayonnement infrarouge (4) émis par la source de lumière (1) après le passage du rayonnement à travers l'échantillon de VCI (3),
- ladite source de lumière (1) et ledit détecteur infrarouge (2) étant fixés l'un à l'autre à l'intérieur de l'unité optique de conception compacte respective avec une distance source de lumière-détecteur infrarouge (6) prédéfinie et réglable de manière variable, ladite source de lumière (1) pouvant être fixée de manière déplaçable longitudinalement par rapport au détecteur infrarouge (2) en fonction du trajet optique du rayonnement infrarouge (4) pour un réglage variable de la distance source de lumière-détecteur infrarouge (6) prédéfinie,
- ladite source de lumière (1) étant une source de lumière infrarouge moyenne qui émet un rayonnement infrarouge (4) dans la plage de longueurs d'onde infrarouges de 2,5 µm à 50 µm, et
- ledit détecteur infrarouge (2) étant un spectrophotomètre qui est conçu pour détecter de manière quasi-continue les spectres du rayonnement infrarouge (4) dans la plage de longueurs d'onde infrarouges de 2,5 µm à 50 µm,
**caractérisé en ce que** le dispositif de test comporte en outre un support d'échantillon (9) destiné à la fixation d'un échantillon de VCI en forme de film (3) conçu sous la forme d'un élément façonné à géométrie déterminée, ledit support d'échantillon (9) étant conçu pour tendre l'échantillon de VCI en forme de film (3) à plat dans un plan exempt de plis.

2. Dispositif de test selon la revendication 1, **caractérisé en ce que** cette unité de processeur et une unité de base de données destinée au stockage de spectres d'inhibiteurs de corrosion volatils, VCI, connus, ladite unité de processeur étant configurée pour identifier matériellement l'inhibiteur de corrosion volatil, VCI, à tester, en comparant les spectres détectés aux spectres connus stockés dans l'unité de base de données.

3. Dispositif de test selon la revendication 1 ou 2, **caractérisé en ce qu'il** comprend ces deux unités optiques, lesdites deux unités optiques, dotées d'un rayonnement infrarouge (4) dirigé dans des directions opposées, étant disposées à distance l'une de l'autre transversalement au trajet optique du rayonnement infrarouge (4).

4. Dispositif de test selon l'une quelconque des revendications 1 à 3, **caractérisé en ce que** le dispositif de test est conçu de sorte que l'échantillon de VCI (3) puisse passer à travers l'unité optique avec un déplacement relatif (7) transversal au trajet du rayonnement infrarouge (4) entre la source de lumière (1) et le détecteur infrarouge (2).

5. Procédé de test pour déterminer la concentration d'un inhibiteur de corrosion volatil, VCI, dans un échantillon de VCI (3) transparent à la lumière infrarouge contenant l'inhibiteur de corrosion volatil, VCI, et conçu sous la forme d'un élément façonné à géométrie déterminée, par spectroscopie infrarouge de transmission, réalisée au moyen du dispositif de test selon l'une quelconque des revendications 1 à 4, une pluralité de spectres du rayonnement infrarouge (4) dans la plage de longueurs d'onde infrarouges de 2,5 µm à 50 µm étant détectés de manière quasi-continue, tandis que l'échantillon de VCI (3) est introduit dans ladite au moins une unité optique du dispositif de test transversalement au trajet optique du rayonnement infrarouge (4), ledit échantillon de VCI en forme de film (3) étant tendu à plat dans un plan exempt de plis au moyen du support d'échantillon (9), et ladite concentration d'inhibiteur de corrosion volatil, VCI, dans l'échantillon de VCI (3) étant déterminée par l'analyse de données multivariées de la pluralité de spectres détectés du rayonnement infrarouge (4).

6. Procédé de test selon la revendication 5, **caractérisé en ce que** l'échantillon de VCI (3) passe à travers le trajet optique du rayonnement infrarouge (4) des deux unités optiques.

7. Procédé de test selon la revendication 5 ou 6, **caractérisé en ce que** l'échantillon de VCI (3) est un film de VCI qui est constitué d'un film plastique transparent à la lumière infrarouge contenant l'inhibiteur de corrosion volatil, VCI.
